Europäisches Patentamt

European Patent Office

Office européen des brevets

(11) Publication number: **0 017 218**
**B1**

# EUROPEAN PATENT SPECIFICATION

(45) Date of publication of patent specification: **15.07.87**

(21) Application number: **80101756.7**

(22) Date of filing: **02.04.80**

(51) Int. Cl.⁴: **F 02 D 43/00** // F02D41/06, F02P5/145

(54) **Method of electronically controlling internal combustion engines.**

(30) Priority: **06.04.79 JP 40934/79**

(43) Date of publication of application:
**15.10.80 Bulletin 80/21**

(45) Publication of the grant of the patent:
**15.07.87 Bulletin 87/29**

(84) Designated Contracting States:
**DE FR GB**

(56) References cited:
FR-A-2 384 115
FR-A-2 406 728
US-A-3 969 614
US-A-4 163 282
US-A-4 214 306
ELECTRONICS INTERNATIONAL, vol. 51, no. 18, August 1978, New York, US, B.L. PEUTO et al. "One-chip micro-computer excels in I/O-and memory-intensive uses", pages 128-133
IEEE INTERCON, CONFERENCE RECORD, 8-10 April 1975, New York, The Institute of electrical and electronic engineers, S.S. DEVLIN: "Microprocessors as automotive on-board controllers", page 1613

(73) Proprietor: **Hitachi, Ltd.**
5-1, Marunouchi 1-chome
Chiyoda-ku Tokyo 100 (JP)

(72) Inventor: **Amano, Matsuo**
2374-105, Okubocho
Hitachi-shi (JP)
Inventor: **Imai, Masumi**
8-13, Nakanarusawacho-4-chome
Hitachi-shi (JP)
Inventor: **Sugawara, Toru**
309-4, Ishinazakacho
Hitachi-shi (JP)
Inventor: **Sakamoto, Shinichi**
20-3, Ayukawacho-6-chome
Hitachi-shi (JP)
Inventor: **Miki, Masayuki**
2643-1, Katsukura
Katsuta-shi (JP)
Inventor: **Sasayama, Takao**
2712-34, Kanesawacho
Hitachi-shi (JP)

(74) Representative: **Patentanwälte Beetz sen. -
Beetz jun. Timpe - Siegfried - Schmitt-Fumian**
Steinsdorfstrasse 10
D-8000 München 22 (DE)

Courier Press, Leamington Spa, England.

## Description

The present invention relates to a method of electronically controlling the operation of an internal combustion engine according to the preamble of claim 1. The control steps are effected by digital processings and arithmetic operations carried out by a central processing unit (CPU).

According to the prior art control techniques (U.S. Patents Nos. 3 969 614 and 4 163 282) a series of programs prepared for fetching information from various sensors for detecting engine operating conditions and setting control quantities for every function to be controlled are executed in accordance with the rotation of the engine to thereby control the operation of the engine. Such control programs include a fuel quantity control program, an ignition timing program and an engine initiation program, for example. The fuel quantity control program and the ignition timing control program are executed in synchronism with detection of a predetermined crank angle during revolution of the engine, whereby signals representing the fuel supply quantity as well as the ignition timing advance angle which are arithmetically calculated through execution of the programs described above are supplied to associated pulse output circuits.

The control of the engine operation in which predetermined programs are executed in certain states of the engine operation and terminated upon setting of the calculated data values at the pulse output circuits or upon changing of the operational state of the engine in the manner described above has a great disadvantage because the load condition of the central processing unit or CPU changes remarkably in dependence on the operating conditions of the engine.

The latter disadvantageous condition effects degradation in the serviceability of the CPU because the number of tasks to be executed by the CPU will increase, e.g. with increasing speed of the engine. The result can be that the CPU is not able to deal with the increased number of requests. On the other hand, the load ratio of the CPU is decreased at low speed operation of the engine, which means that the capability of the CPU is not fully utilized. In this way, the known control method and system cannot provide control functions in a manner compatible satisfactorily with the processing capability of the CPU.

Further, when the content of one of the plural control programs has to be altered and new programs have to be added, all the programs need to be renewed in the case of the control systems disclosed in the patent specifications recited above.

Besides, there is provided no supervisory program for monitoring the execution of the control programs in the case of the prior art control system, so that it was impossible to change the sequence of execution of the programs.

For obviating the shortcomings described above, a method and an apparatus for electronically controlling internal combustion engines have been developed (EP—A—17 219) with which the arithmetic operation is divided into a plurality of tasks in dependence on the processing contents of the CPU, while a supervisory program is provided for supervising or monitoring the execution of the plurality of the tasks, wherein the individual tasks are allotted with respective predetermined activation periods in dependence on the functions of the tasks so that each of the tasks is executed for every activation period or timing allotted thereto.

However, it has been found that the activation of the tasks at respective predetermined periods from the time point for starting the engine results in a rather poor starting performance or behavior of the engine.

A further known electronic fuel injection control apparatus is disclosed in US—A—4 214 306.

The problem to be solved by this known apparatus is the periodic surge which occurs mainly when the engine is decelerated with the throttle valve thereof being closed or accelerated from a low rotation speed. This vibratory back-and-forth motion deteriorates the vehicle driveability. Thereby the rotational speed of the engine changes greatly at the frequency which is one-fourth of the rotational speed in time relation with the surge, with both the amount of intake air and intake pressure of the engine remaining unchanged.

It has been found that the periodic surge is due to a resonance between the change in the output torque of the engine and the mechanical structure of the vehicle. The US—A—4 214 306 proposes as a counter-measure to avoid the above mentioned resonance to design the electronic fuel injection control apparatus to calculate the amount of fuel such that the basic mixture ratio of air and fuel supplied to the engine becomes richer than the stoichiometric ratio. This is advantageous to prevent the surge of the vehicle since the change in the mixture ratio relative to the basic rich mixture ratio is small enough to decrease the change in the output torque or the rotational speed of the engine.

From the standpoint of fuel economy it is more desirable as proposed in the US—A—4 214 306 to decrease the change in the mixture ratio relative to the change in the rotation speed of the engine with the basic mixture ratio being predetermined at or leaner than the stoichiometric ratio.

The US—A—4 214 306 does not disclose a solution for the problem in the transition phase from the engine start by cranking by means of a starter motor to a steady state, e.g. the idling state of the engine.

Therefore, it is the object of this invention to improve the method of the EP—A—17 219 for electronically controlling the operation of an internal combustion engine to obtain an improved responsibility of the calculation for engine control data during the starting phase of the engine.

The above object is achieved in a method comprising the measures of the preamble of claim 1 by the characterizing method steps thereof.

The dependent claim 2 characterizes an advantageous development of this method.

The invention will become more apparent from the following description of a preferred embodiment in conjunction with the accompanying drawings, in which:

Fig. 1 shows in a block diagram a general arrangement of a control circuit;

Fig. 2 shows schematically a program system for executing tasks;

Fig. 3 illustrates a sequence for activating the tasks according to the invention;

Fig. 4 shows in detail a program INITIALIZ employed in carrying out the invention;

Fig. 5 shows details of a program ADC1 IN;

Fig. 6 shows details of a program ISTRT;

Fig. 7 graphically shows an ignition timing characteristic in a starting operation of the engine;

Figs. 8 and 9 graphically illustrate air supply characteristics in the engine starting operation;

Fig. 10 shows details of a program MONIT;

Fig. 11 is a flow chart to illustrate details of a program denoted by numeral 224 in Fig. 2;

Fig. 12 is a flow chart to illustrate in detail the operation of a task scheduler; and

Fig. 13 is a view to illustrate the operation for generating activation requests for task programs.

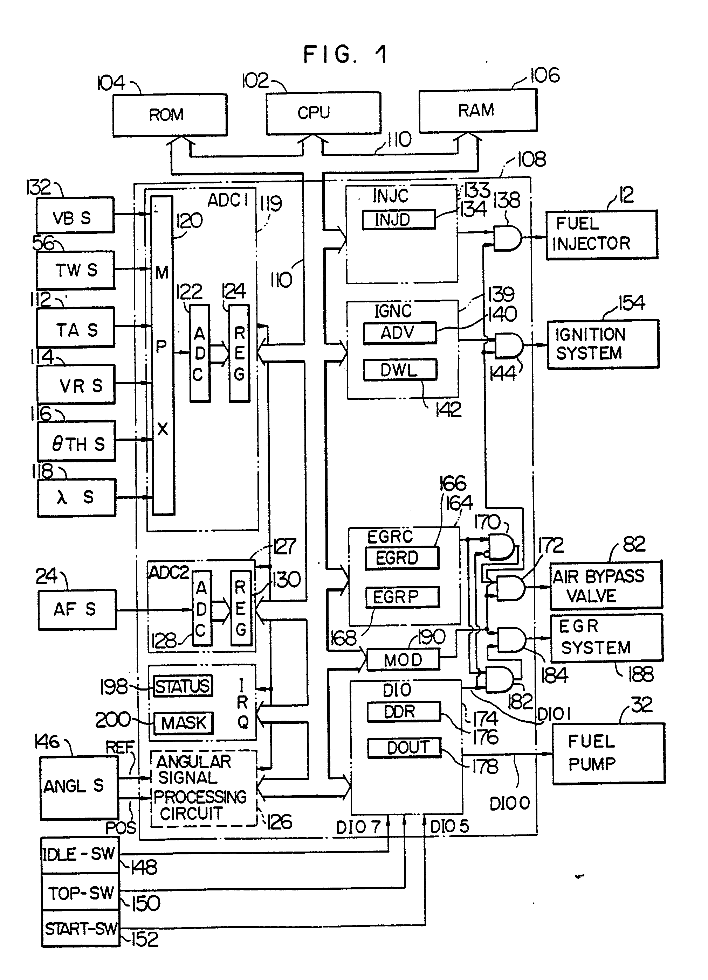

Fig. 1 shows in a schematic diagram the general arrangement of a whole control system. The control system includes a central processing unit (CPU) 102, a read-only memory (ROM) 104, a random access memory (RAM) 106, and an input/output interface circuit 108. The CPU 102 performs arithmetic operations for input data from the input/output circuit 108 in accordance with various programs stored in the ROM 104 and feeds the results of the arithmetic operation back to the input/output circuit 108. Temporal data storage as required for executing the arithmetic operations is accomplished by using the RAM 106. Various data transfers or exchanges among the CPU 102, ROM 104, RAM 106 and the input/output circuit 108 are realized through a bus line 110 composed of a data bus, a control bus and an address bus.

The input/output interface circuit 108 includes input means constituted by a first analog-to-digital converter 119 (hereinafter referred to as ADC1), a second analog-to-digital converter 127 (hereinafter referred to as ADC2), an angular signal processing circuit 126, and a discrete input/output circuit 174 (hereinafter referred to as DIO) for inputting or outputting a single-bit information.

The ADC1 includes a multiplexer 120 (MPX) which has input terminals receiving the output signals from a battery voltage detecting sensor (VBS) 132, a sensor 56 for detecting the temperature of the cooling water (hereinafter referred to as TWS), an ambient temperature sensor 112 (hereinafter referred to as TAS), a regulated-voltage sensor (VRS) 114, a sensor 116 for detecting the throttle angle (hereinafter referred to as $\theta$THS) and a $\lambda$-sensor 118 (hereinafter referred to as $\lambda$S). The multiplexer MPX 120 selects one of the input signals to supply it to an analog-to-digital converter circuit (ADC) 122. The digital signal output from the ADC 122 is held by a register (REG) 124.

The output from an air flow sensor (AFS) 24 is supplied to the input of the second A/D-converter ADC2 127 and converted into a corresponding digital signal through an analog-to-digital converter circuit (ADC) 128. The digital output from the ADC 128 is loaded into a register (REG) 130.

An angle sensor (ANGL) 146 is provided which produces a signal representative of a standard or reference crank angle, e.g. of 180° (this signal will be hereinafter termed REF signal) and a position signal representative of a minute crank angle (e.g. 1°) which signal will be hereinafter referred to as POS signal. Both of the signals REF and POS are applied to the angular signal processing circuit 126 to be shaped.

The discrete input/output circuit (DIO) 174 has inputs connected to an idle switch 148 (hereinafter referred to as IDLE-SW), a top-gear switch 150 (hereinafter termed TOP-SW) and a starter switch 152 (hereinafter referred to as START-SW), respectively.

Next, the operation of the pulse output circuits and the objects to be controlled will be described in conjunction with the arithmetic operations executed by the CPU 102. A fuel-air ratio control device 133 (hereinafter referred to as INJC) serves for varying the duty cycle of the pulse signal applied to the injector 12 thereby to control the fuel injection quantity in the case of the embodiment being described. When the duty cycle of the pulse signal produced from the INJC 133 is increased, the fuel supply quantity is correspondingly increased. The INJC 133 includes a register 134 (hereinafter referred to as INJD) for setting the data representing the duty cycle described above. Thus, the fuel is injected by the injector 12 during the period of the duty set in the register 134 in response to the REF pulse. There data are supplied from the CPU 102.

In this manner, pulses having a pulse width corresponding to the fuel quantity to be injected are generated by the INJC 133 and applied to the injector 12 through an AND gate 138. An ignition pulse generator circuit 139 (hereinafter referred to as IGNC) is provided with a register 140 (hereinafter referred to as ADV) for setting therein ignition timing data and a register 142 (hereinafter referred to as DWL) for controlling the duration of the primary current flowing through the ignition coil. Data for these controls are available from the CPU 102. The output pulses from the IGNC 139 are applied to the ignition system 154 through an AND gate 144.

A pulse generator circuit 164 (hereinafter referred to as EGRC) for producing a pulse signal to control the quantity of exhaust gas to be recirculated (EGR) includes a register 168 (hereinafter termed EGRP) for setting the pulse repetition period and a register 166 (hereinafter termed EGRD) for setting the duty cycle of the pulse signal which is supplied to the air solenoid valve 82 through AND gates 170 and 172, the AND gate 170 having the other input supplied with the output signal DIO1 from the DIO 174. More specifically,

when the signal DIO1 is at level "L", the AND gate 170 is enabled to conduct through the AND gate 172 the control pulse signal for controlling the air solenoid valve 82.

On the other hand, when the signal DIO1 is at level "H", an AND gate 182 is made conductive to control through an AND gate 184 the EGR system 188.

The DIO 174 is an input/output circuit for a single bit signal as described hereinbefore and includes to this end a register 176 (hereinafter referred to as DDR) for holding data to determine the output or input operation, and a register 178 (hereinafter referred to as DOUT) for holding output data. The DIO 174 produces an output signal DIO0 for controlling the fuel pump 32.

A register 190 (hereinafter referred to as MOD) serves to hold therein commands for designating various internal states within the input/output circuit 108. For example, all of the AND gates 138, 144, 172 and 184 can be enabled or disenabled by a command set at the register MOD 190. In other words, the outputs from INJC, IGNC, EGRC etc. can be selectively initiated and inhibited by setting corresponding commands at the MOD register 190.

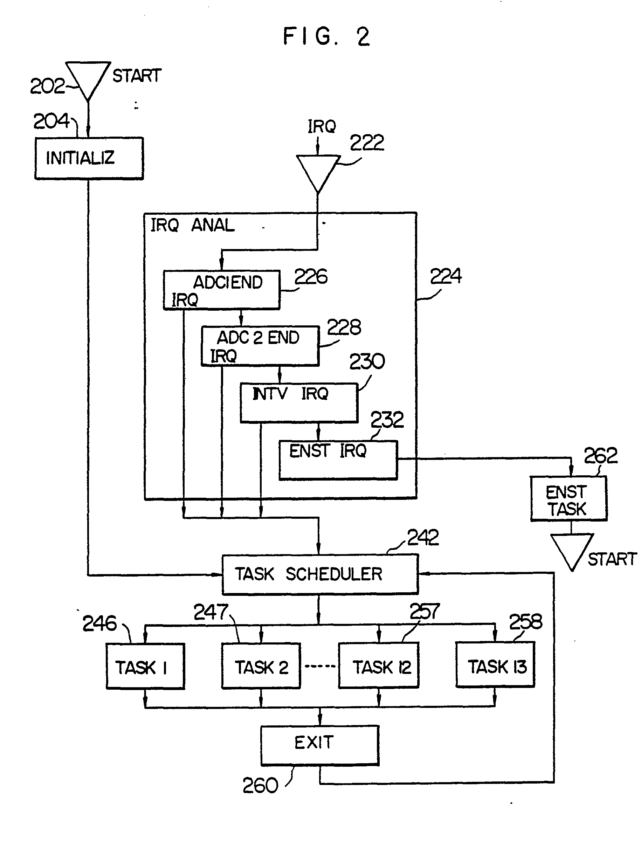

Fig. 2 illustrates a program system for the control circuit shown in Fig. 1. When the power supply is turned on by a key switch (not shown), the CPU 102 is set in a start mode (step 202) to execute an initialization program (INITIALIZ) 204. By this execution, at first, ADC1 119 is initiated for converting predetermined analog data of those applied thereto into corresponding digital values which data are fetched upon occurrence of ADC1 END interrupt indicating the completed A—D conversion. In a similar manner, the operation for fetching or sampling other analog input data in terms of the corresponding digital values are successively repeated. Subsequently, the state of the starter motor switch is observed by ISTRT program, and an activation request of ADC1IN is set. These operations are successively repeated. .

When the starter switch is turned on and the starter motor is rotated, the MONIT program for calculating the fuel supply quantity and the ignition timing is activated, while inhibition of the interval interrupt request is removed. Thereafter, until a next activation request is issued, the CPU executes background jobs (BACKGROUND JOB). The background jobs include, for example, a task for calculating the quantity of EGR (hereinafter referred to as EGR CAL. TASK) and a task for calculating an air bypass quantity (hereinafter referred to as ISC TASK). When an interrupt request (hereinafter termed IRQ) appears during the execution of this task, an IRQ analyzing program 224 (hereinafter termed IRQ ANAL) is executed from the start step 222. The program IRQ ANAL is constituted by an end interrupt processing program 226 for the ADC1 (hereinafter referred to as ADC1 END IRQ), an end interrupt processing program 228 for the ADC2 (hereinafter referred to as ADC2 END IRQ), an interval interrupt processing program 230 (hereinafter referred to as INTV IRQ) and an engine stop interrupt processing program 232 (hereinafter referred to as ENST IRQ), and issues activation requests (hereinafter referred to as QUEUE) to the tasks to be activated among those described below.

The tasks to which the request QUEUE is issued from the program IRQ ANAL 224 are task 1 to task 13 denoted by 246 to 258 in Fig. 2. The numbers of these tasks represent the sequence of significances or priorities allotted to them in accordance to which the tasks are to be executed. The task to which the request QUEUE from the ENST IRQ program 232 is issued is a task 262 for processing the stopping of the engine (this task will be hereinafter referred to as ENST TASK). When the task ENST TASK 262 has been executed, the control program is set back to the start mode, and the start step 202 is regained.

A task scheduler 242 serves to determine the sequence according to which the tasks are executed so that the tasks to which the request QUEUE is issued or the execution of which is interrupted are executed, starting from the task of the highest priority. Upon completed execution of the task, a termination indicating program 260 (hereinafter referred to as EXIT) is executed to give a corresponding information to the task scheduler 242. Subsequently, the task of the next highest priority among those in queue is executed and so forth.

When there remains no task the execution of which is interrupted or to which the request QUEUE is issued, the execution of the background job is regained under the command of the task scheduler 242. Further, when IRQ is issued during the execution of a given task among those 1 to 13, the starting step 222 of the IRQ processing program is regained.

Activations and functions of the individual tasks are listed in Table 1. In this Table, the numbers 1 to 13 represent the significances or priorities allotted to the individual tasks. The tasks are executed in the sequence of the numbers 1 to 13.

TABLE 1

| Task No. | Identification of programs | Functions | Activation (timing) |
|---|---|---|---|
| — | IRQ ANAL | Analysis of IRQ and issue of requests for initiating tasks | IRQ |
| — | TASK SCHEDULER | Determination of tasks to be executed | End of IRQ ANAL or end of EXIT |
| — | EXIT | Indication of ended executions of task, Resetting R flag of TCW of ended task | End of individual task |
| — | ENST TASK | Stop of fuel pump and output of IGN starting INTLIZ | ENST IRQ |
| — | INTLIZ | Setting initial values at input/output circuit and RAM | START or RE-START (End of ENST) |
| 1. | ADC2IN | Fetching of output from ADC2 | INTV IRQ (10 m/sms) or ADC2 END |
| 2 | ADC2ST | Initiation of ADC2 | INTV IRQ (10 m/sms |
| 3 | RPMIN | Fetching of engine speed | INTV IRQ (10 m/sms |
| 4 | INJ | Calculation of duty cycle for controlling fuel-air ratio | INTV IRQ (20 m/sms) |
| 5 | IGNCAL | Calculation of ignition time | INTV IRQ (20 m/sms) |
| 6 | DWLCAL | Calculation of current supply initiation timing for ignition coil | INTV IRQ (20 m/sms |
| 7 | MONIT | Calculation of fuel quantity and ignition timing for engine start | INTV IRQ (40 m/sms) |
| 8 | ADC1IN | Fetching of output from ADC1 | INTV IRQ (50 m/sms) or ADC1 END |
| 9 | ADC1ST | Initiation of ADC1 | INTV IRQ (50 m/sms) |
| 10 | HOSEI | Calculation of corrections | Activated by ADC1IN |
| 11 | ISTRT | Calculation of initial fuel quantity and ignition timing | Activated by ADC IN |
| 12 | ISC | Calculation of duty cycle for controlling air bypass quantity | BACKGROUND JOB |
| 13 | EGRCAL | Calculation of duty cycle for controlling EGR valve | BACKGROUND JOB |

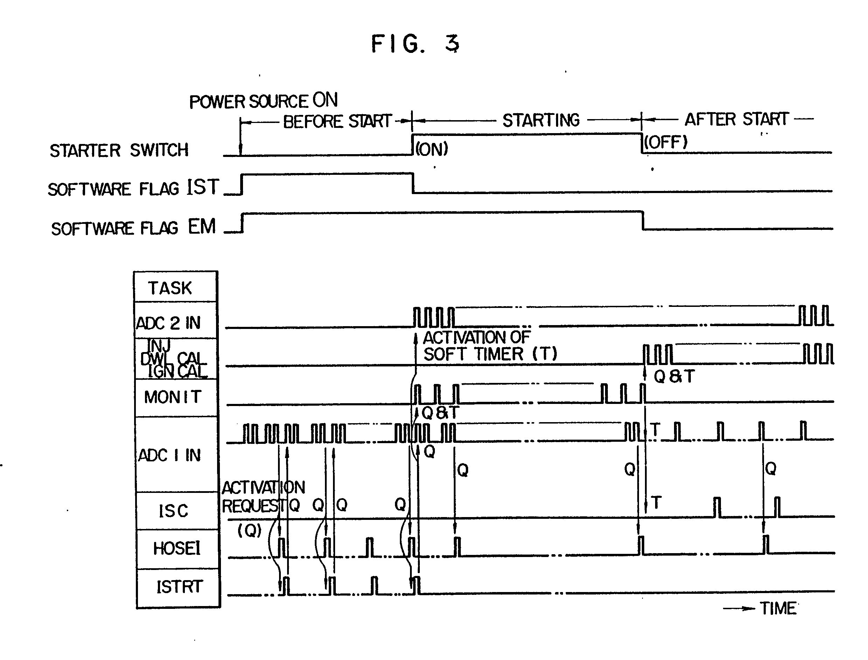

As can be seen from the Table 1, there are provided programs such as IRQ ANAL, TASK SCHEDULER and EXIT for supervising or monitoring the control program shown in Fig. 2. These supervising programs (hereinafter referred to as OS) are held in ROM 104 at addresses A000 to A2FF (Fig. 3)

Each of the programs ADC2IN, ADC2ST and RPMIN are activated upon every occurrence of INTV IRQ which is periodically generated at a time interval of 10.ms. The programs INJ, IGNCAL and DWLCAL are activated for every INTV IRQ which is generated at a time interval or period of 20 ms. The program MONIT is activated for every INTV IRQ generated at a time interval or period of 40 ms. The programs ADC1IN and ADC1ST are activated for every INTV IRQ generated at a time interval of 50 ms. The EGRCAL program and ISC program are for the background jobs. The values (hereinafter referred to as TTM) representing the

5

periods or time intervals at which the individual programs are activated by a timer counter are stored in ROM 104 at addresses B200 to B2FF.

Other data as required are stored at addresses B300 to B3FF. Further, data ADV MAP, AF MAP and EGR MAP constituting maps for arithmetic operations are also stored at addresses B400 to B700.

The activation of the tasks of the control system shown in Fig. 2 for the engine starting operation is illustrated in the time chart of Fig. 3.

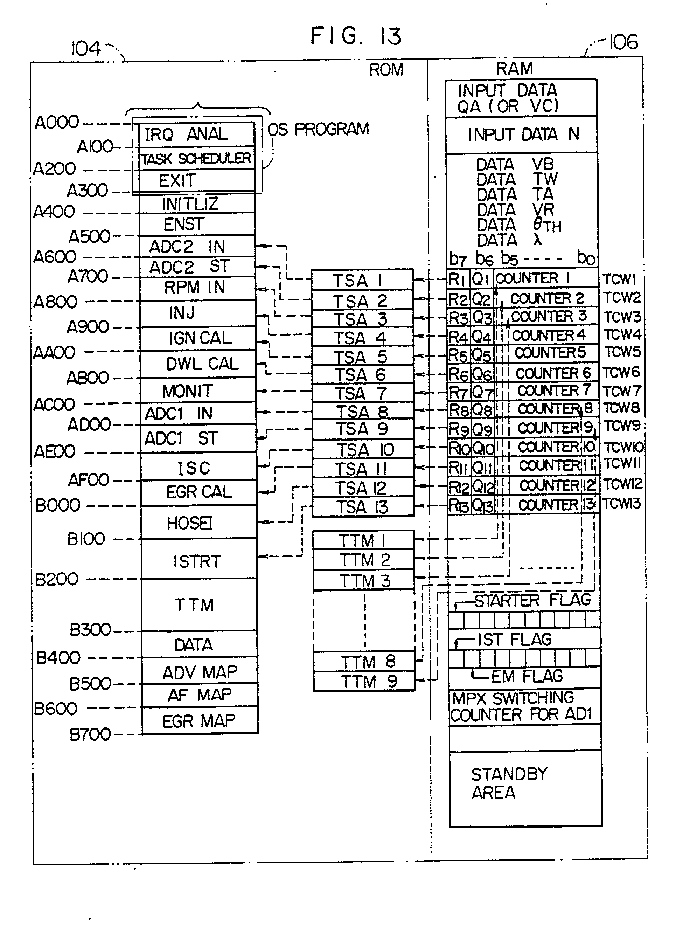

When the power supply is turned on, software flags IST (initial start) FLAG and EM (engine stop mask) FLAG are set in RAM 106 shown in Fig. 13. More specifically, a binary bit "1" is set at the areas IST FLAG and EM FLAG of RAM 106 shown in Fig. 13. This is performed by starting and executing the program INITIALIZ 204 shown in Fig. 2. After execution of this program, the program ADC1IN is activated, and the output from ADC1 is successively fetched. When all outputs of ADC1 are fetched, the programs HOSEI and ISTRT are activated by the ADC1IN and executed. In a similar manner, the fetching of output from ADC1 and the activation of the programs HOSEI and ISTRT are successively repeated.

When the starter switch is turned on, this fact is detected in ISTRT task and then the flag IST is reset (i.e. bit at the bit position for the software flag IST in RAM is reset to zero), while a soft timer for the programs ADC2IN and MONIT is activated by the program ISTRT with the inhibition of IRQ for these programs being removed, and the activation request is issued to the programs MONIT and ADC2IN. Thereafter, the programs ADC2IN, ADC2ST and MONIT are periodically activated at predetermined time intervals, respectively. The fuel quantity and the ignition timing at this time point are arithmetically determined through execution of the program MONIT. The program ADC1IN is executed at the predetermined time interval. When the output from ADC1 has all been fetched, the activation request is issued only to the program HOSEI. Now, the period during which the starter switch is turned on (i.e., the starter motor is driven) is referred to the starting state.

When the starter switch is turned off, the engine is in the self-running state. At this time point, the software flag EM is cleared, while the programs INJ, IGNCAL and DWLCAL are initiated by the program MONIT. These programs are subsequently activated periodically at the predetermined respective time intervals. Simultaneously, the soft timer for the program MONIT is stopped, while all the other soft timers are activated. Consequently, subsequent activations of the tasks take place in response to the occurrence of the associated INTV IRQ's.

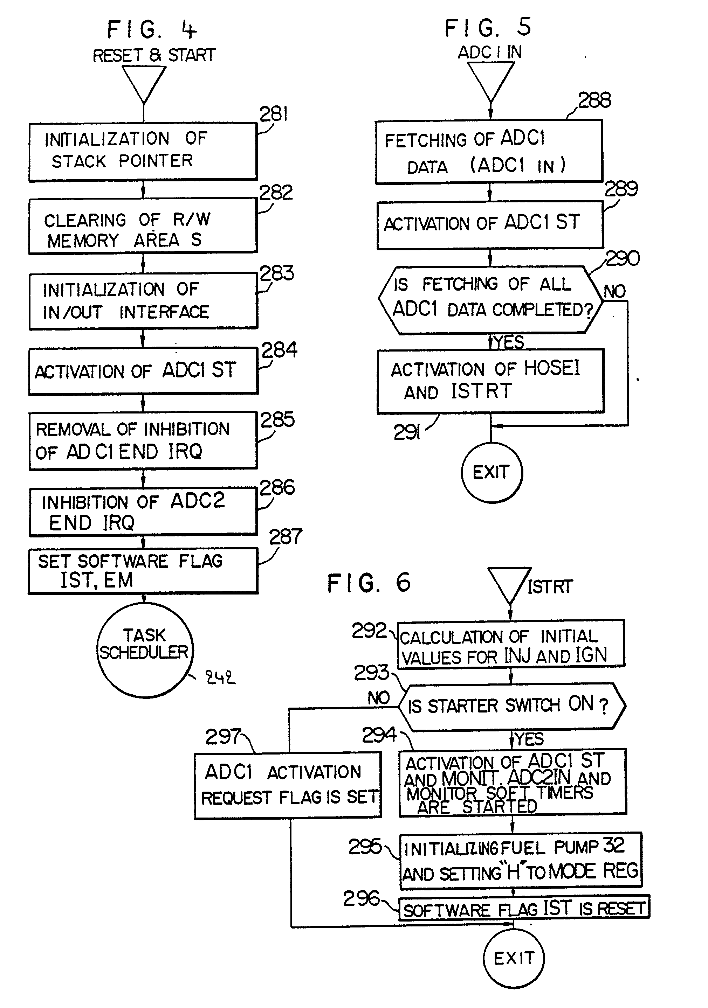

The operations briefed above will now be described in detail by referring to the flow charts shown in Figs. 4 to 7.

When the power supply is turned on, the program INITIALIZ 204 illustrated in Fig. 4 is executed, and the software flags EM and IST are set, as described above.

At step 281, a standby area to which the contents of CPU is transferred upon occurrence of IRQ is provided in RAM 106, as is shown in Fig. 13. At step 282, the contents of RAM 106 are all cleared. At step 283, the registers of the input/output interface circuit 108 are initialized (i.e. loaded with initial values). This initialization step includes setting of the initial value of the angle sensor 146, setting of DDR of DIO 174, setting of the detection period for issuing of ENST IRQ, and setting of the measuring time for detecting the revolution number of the engine. At step 284, the program ADC1 ST is triggered. At step 285, for removing inhibition of ADC1 END IRQ, level "H" is set at a flip-flop constituting the mask register 200 shown in Fig. 1, as the result of which ADC1 END interrupt request is thereafter allowed to be issued for executing the program ADC1IN. At step 286, ADC2 END IRQ is inhibited by setting the inhibition command for ADC2 END IRQ at the mask register 200. Namely, level "L" is set at a flip-flop constituting the mask register. At step 287, software flags IST, EM are set in the RAM 106 shown in Fig. 13. When the step 287 is terminated, the program proceeds to the task scheduler to await appearance of ADC2 END IRQ.

The program ADC1IN is illustrated in the flow chart shown in Fig. 5. When the program ADC1ST is activated at step 284 shown in Fig. 4, jump is made to the start address of the program AD1ST by the execution of the TASK SCHEDULER 242. As the consequence, the output signal from the battery voltage detecting sensor (VBS) 132 which constitutes one of the inputs to MPX 120 of the ADC1 119 shown in Fig. 1 is selected and applied to the input of the ADC 122. At this time point, issue of ADC1 END IRQ is awaited. When the digital value output from ADC 122 upon completed conversion thereof is loaded into REG 124, the information containing the termination of the operation of ADC1 119 is set in to a flip-flop constituting the status register STATUS 198, and ADC1 END IRQ is transferred to the CPU 102. Consequently, an activation request is issued to the program ADC1IN through execution of the program ADC1 END 226 shown in Fig. 2. In other words, level "H" is set at a bit position Q8 of RAM 106 in Fig. 13. The task scheduler will then detect the activation request to thereby activate the program ADC1IN shown in Fig. 5.

At step 288, data are fetched from the register 124 and set in a data area DATA VB of RAM 106 in Fig. 13. At step 289, the program ADC1ST is activated to select the sensor 56. At step 290, it is ascertained whether all the output values from the sensors 132, 56, 112, 114, 116 and 118 have been fetched. Since only the fetching of the output signal from the sensor 132 has been completed in this case, the routine is returned to the EXIT step, whereby the program ADC1ST is started again. The MPX 120 thus selects the output from the cooling water temperature sensor TWS 56 as the next input thereto. Upon completion of the analog-to-digital conversion of the output signal from the sensor 56, the program ADC1IN is executed in response to issuing of ADC1 END IRQ, whereby the digital value representative of the output from the sensor TWS 56 held in the register or REG 124 is read out and stored in a data area DATA TW in RAM 106.

Next, the program proceeds to the EXIT step, and then the routine is returned to the ADC1ST program by the TASK SCHEDULER. In this manner, through execution of the programs ADC1ST and ADC1IN in a looped routine, the digital values representing the outputs from the sensors, respectively, are successively fetched. When all the data from ADC1 have been fetched, the program proceeds to a step 291 at which level "H" is set at each of bit positions Q12 and Q13 of RAM 106 in Fig. 13 for requesting the programs HOSEI and ISTRT to be activated, and then these programs are executed according to the program of the task scheduler.

Fig. 6 is a flow chart of the program ISTRT.

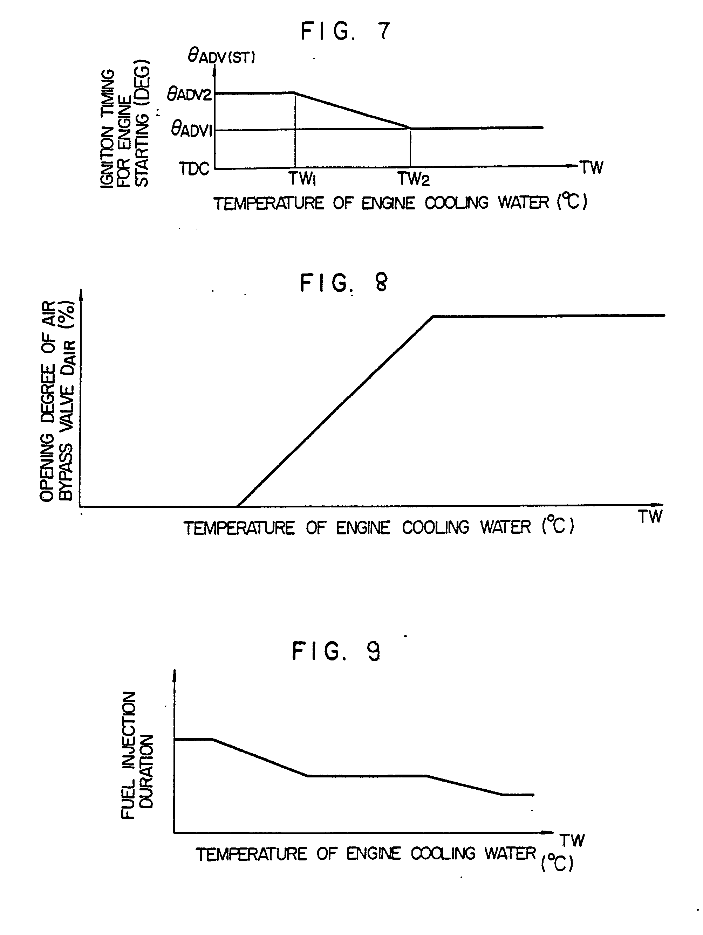

At step 292, the ignition timing for starting the engine is arithmetically determined and set. To this end, the ignition timing $\theta ADV(ST)$ is arithmetically determined as a function of the temperature TW of the engine cooling water. The relationship between the ignition timing for starting the engine and the cooling water temperature is graphically illustrated in Fig. 7. In accordance with the characteristic relationship illustrated in Fig. 7, the ignition timing $\theta ADV(ST)$ is arithmetically determined. The results as obtained are loaded in the register ADV 140 of IGNC 139 shown in Fig. 1.

Subsequently, the initial value for the fuel injection time is arithmetically determined. The arithmetical operation is executed in accordance with the relationship between the fuel injection time and the temperature TW of the engine cooling water such as shown in Fig. 9. The result of the arithmetic operation is placed in the register INJD 134.

Next, at step 293, it is checked whether the starter switch is closed or not by monitoring a bit DIO 5 of the DIO 174 shown in Fig. 1.

When the starter switch is opened, activation request is issued to the program ADC1ST at step 297. More specifically, a bit "1" is set at the sixth bit position b6 of the task control word TCW9 of RAM 106 shown in Fig. 13, whereby ADC1 is activated. Subsequently, the programs ADC1IN, HOSEI and ISTRT are executed. This routine is repeated until the starter switch is turned on.

In this manner, by virtue of the fact that the execution of the programs described above is repeated for a number of times until the starter switch is turned on, data are fetched from ADC1 for the corresponding number of times and subjected to filtering, as the result of which the ignition timing, etc. can be arithmetically determined on the basis of the constantly updated data. In this manner, when the starter switch is turned on, the engine can be instantly started with a high reliability, since the engine starting operation is carried out on the basis of the optimum data values. Further, the engine starting performance is additionally improved by virtue of the fact that activation request Q is issued to the programs ADC2IN and MONIT in response to the closing of the starter switch, whereby the arithmetical operation for determining the ignition timing is effected on the update data. On the other hand, assuming that only the timers for ADC2IN and MONIT are activated, the fetching of data and calculation would be delayed for the respective predetermined timer interval period in the worst case, whereby the starting performance of the engine would be deteriorated.

During the time interval between the turning-on of the power supply and the closing of the starter switch, the computer can be fully utilized in a useful manner.

When the starter switch is turned on, activation request is issued also to the programs ADC1ST and MONIT at step 294. Additionally, soft timers for the programs ADC2IN and MONIT are started. Thereafter, activation requests for the programs ADC2IN and MONIT are generated automatically at the activation timings indicated in the Table 1.

As an additional preparation procedure for the engine starting operation, at step 295, a bit of high level "H" or logic "1" is set at the 0th bit position of the DOUT register 178 of DIO 174 for initiating the operation of the fuel pump 32. As the result, the 0th bit output DIO 0 of DIO is of high level, resulting in that the fuel pump is electrically energized. Next, the first bit of the DOUT register 178 is set at low level "L". Then, the air bypass valve 82 is controlled by the output from the EGRC circuit 164. In practice, the setting of the 0th bit and the first bit of the DOUT register 178 described above is effected simultaneously.

In order to initiate INJC 133, IGNC 139 and EGRC 164 provided at the output side of the input/output interface circuit 108, bit of high level "H" is set at a mode register 190 described hereinafter, as the result of which the pulse outputs are supplied to the various control devices.

At step 296, the software flag IST is reset. In other words, bit "0" is set at the IST flag area in RAM 106 shown in Fig. 13.

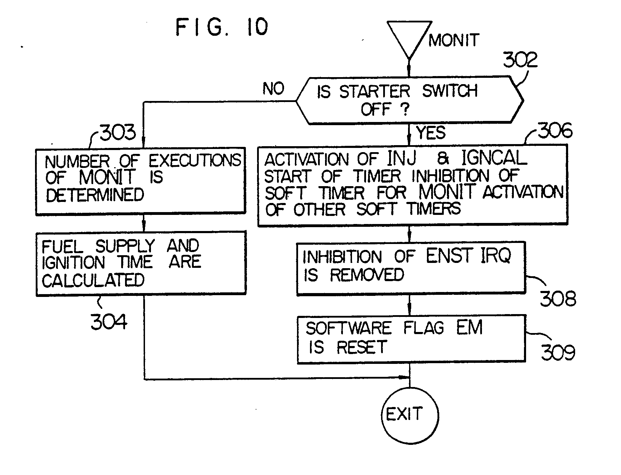

Fig. 10 shows a flow chart of the program MONIT. Activation request to this program is issued periodically at a time interval of 40 ms. By monitoring the bit DIO 5 of the DIO 174 at a step 302, it is checked whether the starter switch is opened. If the result is negative or "NO", it is counted how many times this step is repeated at step 303. In other words, it is determined how many times (N) the program MONIT has been activated. At step 304, the fuel quantity as well as the ignition timing and the current flow initiating time of the ignition coil are arithmetically determined. The arithmetical operation for determining the ignition timing is effected as a function of the temperature of the engine cooling water, as is illustrated in Fig. 7. On the other hand, the time duration of the fuel injection is determined as a function of the temperature of the engine cooling water in Fig. 9 and the value of N determined at step 303. More specifically, the fuel injecting duration is calculated as a time difference obtained by subtracting KN (where K is a constant) from the fuel injection time which is determined on the basis of the cooling water temperature in Fig. 9. Consequently, the duration of the fuel injection becomes shorter as the energization

7

of the starter motor takes a longer time, whereby the combustion in the engine cylinders is much facilitated. In this connection, it is to be noted that the calculation is made on the assumption that N=0 during the period between the turn-on of the power supply and the turn-on of the starter switch. Further, the current flow initiating time of the ignition coil is determined. The fuel quantity and the current flow initiating time are greatly influenced by the variation of a battery voltage. The battery voltage decreases greatly in the starting period during which the starter motor is driven. In order to obtain optimum data of the fuel quantity etc. regardless the sudden changes of the battery voltage, the MONIT program is executed every 50 ms. Further, since ADC1IN is activated in response to ADC1 END IRQ, data of the sensors 132, 56, 112—118 may be sequentially fetched with a time interval of about 25 ms, and then those data fetched from ADC1 can sufficiently trace the sudden change of the battery voltage.

The activation request for the MONIT program is issued by setting a level "H" or "1" at a bit position Q7 of RAM 106 every 50 ms, and then MONIT program is executed in the TASK SCHEDULER, as described hereinafter. At the start of the execution of MONIT program, QUEUE flag set at the bit position Q7 is reset, and RUN flag is set at a bit position R7. In other words, level "L" or "0" and level "H" or "1" are set at the bit positions Q7 and R7, respectively. When the execution of MONIT program is terminated, jump is made to the EXIT program. In the EXIT program, the RUN flag in the bit position R7 is reset to indicate the termination of the MONIT program. Thereafter, upon the lapse of 50 ms, QUEUE flag is set again at the bit position Q7. In this manner, the MONIT program is executed every 50 ms. On the other hand, when the starter switch is turned off, level "H" is set at each of bit positions Q4 and Q5 to activate the programs INJ, DWLCAL and IGNCAL, and at the same time data of TTM 4 and TTM 5 are set in counter 4 and counter 5, respectively, to start the associated soft timers in Fig. 13. At that time, the content of the counter 7 is made "0" to inhibit the soft timer for the program MONIT, while data of TTM 1 to TTM 9 except for TTM 7 are set in counter 1 to counter 8 except for counter 7 respectively to activate all the other soft timers. Additionally, a flip-flop is reset to set command for inhibiting ADC1 END IRQ at the mask register 200.

Next, at step 308, level "H" or "1" is set in a flip-flop to remove inhibition of ENST IRQ. Accordingly, after the step 308, the engine stop can be detected by the ENST IRQ now released.

At step 309, the software flag EM is reset. In other words, the bit at the EM FLAG area of RAM shown in Fig. 13 is set to "0". Then, termination or end indication is made by resetting the bit position R7 in the EXIT program. Now, the engine is in the self-running state controlled by the various programs activated by the associated timers.

As will be appreciated from the above description, issuing of activation requests Q for the programs INJ, DWLCAL and IGNCAL in response to turning-off the starter switch allows the arithmetical operations for determining the fuel supply, ignition, etc. to be effected at once, whereby the engine is driven smoothly on the basis of the constantly updated data values. In contrast thereto, assuming that the activation request is issued only to the timers for the programs INJ, DWLCAL and IGNCAL in response to turning-off the starter switch, the calculation of the required control quantities will be delayed for the respective predetermined timing intervals or periods in the worst case, resulting in a non-smooth driving state of the engine as well as a deterioration of the exhaust gas quality.

According to the preferred embodiment of the invention described above, when activation request is issued to a task program, the timer for activating that task is simultaneously started, to thereby assure a smooth engine control. Particularly, in the case of the embodiment being described, the software flags IST and EM are used for discriminating the states before, during and after the starting operation of the engine in the control for activating the various tasks.

Before the starting operation, only the task ISTRT for determining the fuel injection time or duration for the starting operation is processed together with the associated tasks ADC1IN and HOSEI. In this routine, when analog input information has been once processed for the task ADC1IN, then the activation request Q is issued from this task to the other tasks HOSEI and ISTRT. Accordingly, the tasks HOSEI and ISTRT are processed in this order, and an activation request is issued to the task ADC1IN at the end of the task ISTRT. In this way, the sequence of the tasks ADC1IN, HOSEI, ISTRT and again ADC1IN is executed in this order before the starting of the engine.

When the starter switch is turned on, the operation is in the engine starting mode, wherein the activation requests are issued from the task ISTRT to the other task programs ADC1IN, MONIT and ADC2IN. In this connection, it should be mentioned that the task ADC1IN is activated by the activation request Q, and the task ADC2IN is periodically activated at a predetermined time interval from the associated soft timer, while the task MONIT is activated either by the activation request Q or the soft timer T. Assuming that only the soft timer T is used, a delay corresponding to the predetermined timing interval will be involved in the worst case, making it impossible to attain an optimum fuel injection, representing a great disadvantage for the starting performance of the engine. The same applies to the activation of the task INJ after the engine has been started.

In this manner, by providing two types of activations, i.e. the activation request and the soft timer T for the task for the fuel injection, a smooth transition can be assured among the tasks, which has been found particularly advantageous in starting the engine at low temperatures.

Now, referring to Figure 2, the processing due to the issue or generation of IRQ will be described. The program 224 for analyzing the causes of IRQ comprises subprograms for the processing of ADC1 END IRQ 226, the processing of ADC2 END IRQ 228, the processing of INTV IRQ 230 and the processing of ENST IRQ 232. For executing these subprograms 226, 228, 230 and 232, respectively, the content of the associated IRQ as issued has to be at first examined. To this end, the content in the STATUS register 198 shown in Figure 1 is examined for determining the cause for the IRQ having been issued. In accordance with the cause which gives rise to the generation of IRQ in concern, the subprograms 226, 228, 230 or 232 are executed, as the result of which the activation request QUEUE is issued to the TASK required to be executed among the tasks 1 to 9.

In this connection, it should be mentioned that when too many IRQ's are allowed to be generated, a lot of time is required for executing the supervisory program (hereinafter referred to as OS program), resulting in that the time available for arithmetical operation for the engine control is eventually restricted. Accordingly, in the case of the embodiment being described, it is assumed that ADC1 END IRQ 226 is allowed to be generated only during the time from the turn-on of the power supply to the engine starting operation shown in Figure 3 and otherwise inhibited. More specifically, at step 306 of the MONIT program shown in Figure 10, an inhibit command for ADC1 END IRQ is set at the mask register 200 shown in Figure 1. ADC2 END IRQ 228 is originally inhibited. More specifically, at step 286 of the program INITIALIZ shown in Figure 4, the mask register is so set that ADC2 END IRQ is inhibited. The ADC2 END IRQ is caused to remain inhibited by preventing the IRQ inhibition removal command from being issued.

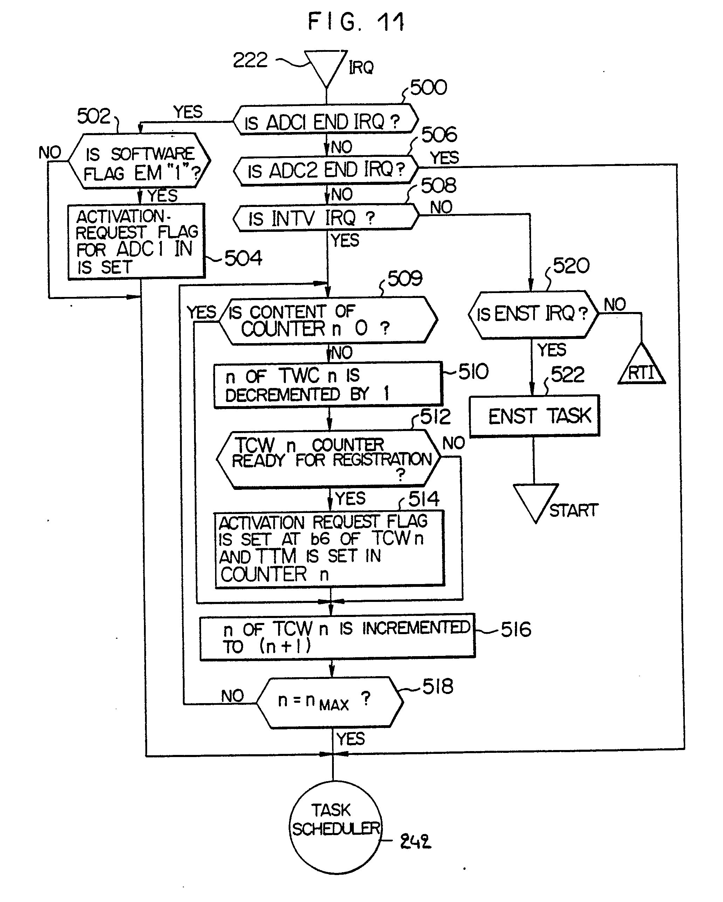

An example of the program 224 is shown in Fig. 11. This program proceeds from the entry step 222 to step 500 where it is decided whether the IRQ being currently issued is ADC1 END IRQ. If the decision is positive or "YES", it is checked at step 502 whether the software flag EM in the RAM shown in Fig. 13 is "1" or not. When this flag is "0", this routine proceeds to the task scheduler. On the other hand, when the flag is "1", an activation request is issued to the program ADC1IN at step 504. To this end, a flag "1" is set at the bit position b6 or Q8 of the task control word TCW8 in RAM 106 shown in Fig. 13. Thereafter, the task scheduler 242 is regained. In the case of the exemplary embodiment, the ADC1 END IRQ is allowed to be generated only in the state before the engine start or in the course of starting the engine as shown in Fig. 3. Otherwise, ADC1 END IRQ is inhibited. When the decision at step 500 leads to "NO", the program proceeds to step 506 at which it is decided whether the IRQ being currently issued is ADC2 END IRQ. If the result of the decision at the step 506 is "YES", the program proceeds to the task scheduler. Otherwise step 508 is executed, whereby ADC2 END IRQ is inhibited in all the engine states.

At step 508, it is decided whether the IRQ being currently issued is the INTV IRQ. If affirmative, the program proceeds to step 509. Steps 509 to 518 are imparted with functions to determine the task program to be activated by the INTV IRQ among the tasks 1 to 9.

Now, if level "L" or "0" is set initially in any of the counters 1 to 9 respectively corresponding to the tasks 1 to 9, an activation request Q is not set at the bit position b6 of the TCW whose counter has initial set value of "0" regardless the presence of the INTV IRQ. Accordingly, the execution is not made for the task the corresponding counter of which has an initial set value of "0".

Thus, if "0" is set in any of the counters 1 to 9, the execution of the corresponding task is stopped. On the other hand, the stop of the execution of the task is removed by setting data of the corresponding TTM in the corresponding counter.

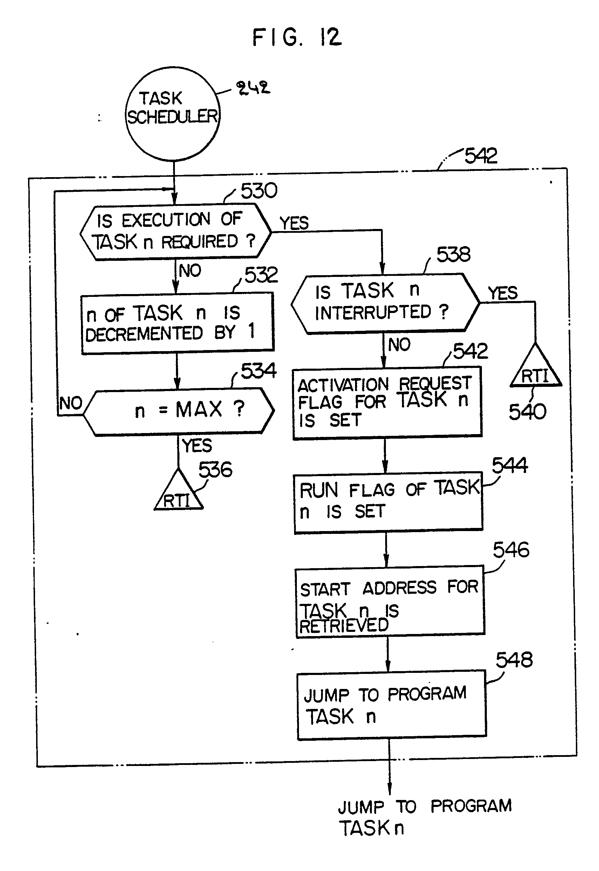

At first, it is decided whether the content of counter 1 corresponding to the task 1 is "0" or not at step 509. When the decision at step 509 leads to "YES", it is assumed that the execution of the task 1 is inhibited, and the program proceeds to step 516 without setting a flag "1" at a bit position Q1. At step 516, retrieval of the activation timing for the program of the task 2 is effected in place of the task 1. If the result of the decision at step 509 is "NO", the program proceeds to step 510. At this step, the task control word for the task 1, i.e. a counter constituted by the bit positions b0 to b5 of TCW1 shown in Fig. 15, is decreased by 1. It should be mentioned that the activation timings for the tasks 1 to 9 listed in the Table 1 are set, respectively, in the counters 1 to 9 corresponding to the counters 1 to 9 of TCW1 to TCW9 in the RAM 106, respectively. Since INTV IRQ is assumed to be periodically generated at a time interval or period of 10 ms, the initial values set at the counters 1 to 9 are equal to 1, 1, 1, 2, 2, 2, 4, 5, and 5, respectively. At step 512, the contents of the counter 1 of TCW1 is compared with that of the task activating timer TTM1 shown in Fig. 13. All the TTM1 to 11 are loaded with "0", wherein the presence of "0" in TTM1 and the presence of "1" in the counter 1 means that the program of task 1 (denoted by 246 in Figure 2) is activated for every 10 ms) since it is assumed that INTV IRQ is generated at a period of 10 ms. At step 512, the content of the counter shown in Fig. 12 and the task timer TTM1 are compared with each other. When coincidence is found, that is, the value of the counter becomes zero (i.e. "YES"), the program proceeds to step 514 at which a flag "1" is set at b6 of the task control word TCW1, i.e. Q1. In the case of the illustrated embodiment, the bits b6 of every TCW represent the flags for requesting the activation of the associated tasks. The data in TTM1 are set in the bit positions b0 to b5 of the counter 1 of TCW1 (i.e. the initial value "1" is set), because the flag "1" is set at b6 of TCW1, i.e. Q1, at step 514.

At step 516, retrieval of the activation timing for the program of task 2 is effected in place of task 1. At step 518, it is decided whether the task 9 has been ended, i.e. if n=10. Since n=2 in this case, the program returns to step 509 at which it is decided whether the content of counter 2 is "0". When the decision at step 509 leads to "NO", the program proceeds to step 510, at which the content of the counter 2 of TCW2 in the RAM 106 shown in Fig. 13 which is the task control word for the program of task 2 is decreased by "1". At step 512, the decreased counter content is compared with the content of TTM2 of the ROM 104 shown in Fig. 13. Since the initial value of counter 2 of TCW2 is "1", its content becomes equal to "0" at step 510.

Consequently, the content of counter 2 coincides with the content of TTM2, whereby a flag "1" is set at the bit position b6 or Q2 of the task control word TCW2 at step 514. Next, at step 516, the task to be retrieved is updated to the task 3. In a similar manner, for the task 4, the content of counter 4 of TCW4 in the RAM shown in Fig. 16 which is the task control word for the program of the task 4 is decreased by 1 at step 510. The content of counter 4 is then compared with that of TTM4 of the ROM 104 shown in Fig. 13 at step 512. In this case, the initial value of counter 4 is equal to "2", which means that the activation timing for the task 4 is 20 ms. Accordingly, assuming now that the contents of counter 4 is "1", then the decision at step 512 leads to "NO", which means that the activation timing is not for the program of the task 4. Thus, the program proceeds to step 516 at which the task to be retrieved is updated to the task 5. In a similar manner, processings are executed up to the task 9, whereupon $n$ becomes equal to 10 at step 516. Thus, the condition $n=n_{max}$ is fulfilled at step 518. The processing is then transferred to the task scheduler 242.

When no INTV IRQ is found at step 508, the program proceeds to step 520 at which it is decided whether the IRQ in question is ENST IRQ. When the decision made at step 508 leads to "NO", the IRQ must necessarily be ENST IRQ. Accordingly, the step 520 may be omitted, and the program may proceed directly to step 522 at which the fuel pump is stopped in accordance with a specific program based on the engine stop. Additionally, all the output signals for the ignition system and the fuel supply control system are reset. The program then returns to the start step 202 shown in Fig. 2.

Fig. 12 shows in detail in a flow chart a program for the task scheduler 242. At step 530, it is decided whether the execution of the task "n" is needed. At first, n=1. Accordingly, decision is made as to the necessity of TASK1 being executed. In other words, the presence of the task activation request is examined in the order of high to low priority levels. Such examination can be made through retrieval of the bit b6 or the flag Q and the bit b7 or the flag R of the respective task control words. The bit position b6 is allotted to the activation request flag. When "1" is present at this position b6, it is determined that the activation request is present. Further, b7 is allotted to the flag indicating that the associated task is under execution. The presence of "1" at b7 indicates that the associated task is under execution and is now being interrupted. Accordingly, when "1" is present at least at one of bits b6 and b7, the scheduler program proceeds to step 538.

At step 538, the flag set at b7 is checked. The presence of "1" at b7 means that the execution is being interrupted. At step 540, the execution being interrupted until then is regained. Flag set at both b6 and b7 cause the decision at step 538 to be affirmative or "YES", whereby the task program being interrupted is re-initiated. In the case where "1" is present only at b6, the activation request flag of the task is cleared at step 542, which is followed by a step 544 where the flag is set at b7 (this flag will be hereinafter referred to as RUN flag). The steps 542 and 544 show that the activation request for the task proceeds to the state in which the task is to be executed. Accordingly, at step 546, the start address of the task program in concern is retrieved. This address can be determined from start address tables TSA provided in the ROM 104 in correspondence to the TCW's of the various tasks. By jumping to the start address as determined, the execution of the task program in concern takes place.

Referring again to Fig. 12, when the decision at step 530 results in "NO", this means that neither an activation request is issued to the program of the task being retrieved nor the program is being momentarily interrupted. In this case, the scheduler program proceeds to the retrieval of the task to be executed next. In other words, the task $n$ is incremented to n+1. At this time, it is checked whether the incremented index n+1 is MAX, i.e. n+1=10. If not, the scheduler program proceeds to the step 530. The above processing is repeated until $n$ has become equal to MAX or 10, whereupon the interrupted program for the background jobs is regained at step 536. In other words, it is confirmed at step 536 that all the programs for the tasks 1 to 9 are not required to be executed, whereby the processing returns to the point of the background job program at which the program has been interrupted in response to the appearance of IRQ.

Fig. 13 illustrates the relationship between the task control words TCW, the TTM representing the task activation time intervals or periods and the task start address tables TSA provided in the ROM. In correspondence to the task control words TCW1 to TCW9, the ROM stores the task activating periods TTM1 to TTM9. For every INTV IRQ, counters are updated successively, and a flag is set at b6 of the associated TCW upon coincidence between the contents of the counter and TTM for the task. When the flag is thus set, the start address of the task is retrieved from the task start address TSA. Jump is made to the retrieved start address, whereby the selected one of the programs is executed. During the execution, a flag is set at b7 of the TCW in the RAM 106 which corresponds to the program being executed. Thus, so far as this flag is set, it is decided that the associated program is being executed. In this way, the program for the task scheduler 242 shown in Fig. 2 is executed. As the consequence, one of the task programs 246 to 258 is executed. When IRQ is issued during the execution of the respective task program, the execution is interrupted again to deal with the IRQ. Assuming that no IRQ is issued, the processing of the task being instantly executed will come to an end. Upon termination of the execution of the task program, EXIT program 260 is next executed.

In the case of the exemplary embodiment being described, the tasks 12 and 13 are for the background jobs which are not activated by INTV IRQ. However, these tasks can be altered to be activated by INTV IRQ. To this end, predetermined activation timings may be initially set at the task control words TCW 12 and TCW 13 corresponding to the tasks 12 and 13, while the bit values of TTM's 12 and 13 provided correspondingly to the tasks 12, 13 are set to "0". Thereafter, the steps 509 to 518 illustrated in Fig. 11 are repeated until *n* becomes equal to 11. To the contrary, when the task activated by INTV IRQ is to be altered to the task for the background job, the initial value of the counter of the corresponding TCW may be set to "0" so that the value of the counter will not coincide with the value of the corresponding TTM (i.e. "0") at step 512. In this way, the tasks for the background jobs and the tasks activated by INTV IRQ can be arbitrarily altered through corresponding modification only of the task programs to be altered without necessity to alter the other programs. Further, a selective alteration of the activation timings of the individual tasks activated by INTV IRQ can be effected without altering the other programs.

Since the task programs are provided independently of one another, an alteration or modification in the content of the individual task programs can be made without exerting any influence on the other programs. Accordingly, in each of the task programs, it is possible to modify the calculation formula and/or to add correction factors in dependence on the conditions under which the engine is operated.

Further, the method of determining the fuel injection quantity, the ignition timing, etc. on the basis of proportional expressions may be replaced by the method in which maps are utilized, and vice versa.

Additionally, interrupt in synchronism with the crank rotation may be employed in place of the timer for activating the task program.

When only particular ones of the tasks are to be activated by timers, the activation periods as required are initially set at the counters of the associated TCW's, while for the tasks to be inhibited from activation, initial values "0" are set at the counters of the corresponding TCWs.

## Claims

1. A method of electronically controlling the operation of internal combustion engines provided with an electronic control system comprising sensors (56, 132, 116, 118, 24, 149) detecting operational conditions (e.g. cooling water temperature (TW), battery voltage (VB), throttle angle ($\theta_{TH}$), air/fuel mixture ratio ($\lambda$), air flow (AF) in the engine intake passage, engine revolution number (N)) of the engine, a central processing unit (CPU) arithmetically determining control quantities for controlling said engine by digital processing of output signals from said sensors, memory means for storing therein programs and data for performing said arithmetic operations and control means for controlling said engine on the basis of the results of the arithmetic operations, characterized by

A) detecting the states of the starter switch and the power supply switch;

B) carrying out the following process steps repeatedly in a looped routine after switching on the power supply and before the starter switch is closed:

B1) detecting the initial conditions of the engine based on the cooling water temperature and the battery voltage, and subsequently

B2) determining the initial fuel supply quantity and the ignition timing in dependence of the cooling water temperature (TW) and the battery voltage (VB) and

C) repeatedly carrying out the following steps in predetermined time intervals respectively during the closed state of the starter switch:

C1) detecting the conditions of the engine based on the cooling water temperature (TW), the engine revolution number (N) and the air flow value (AF), and

C2) determining the fuel supply quantity and the ignition time for the engine start in dependence of the cooling water temperature (TW) and the duration of the closed state of the starter switch, so that the duration of the fuel injection becomes shorter as the energization of the starter motor takes a longer time.

2. A method according to claim 1, characterized in that in the process step (C) a fuel pump is energized for delivery of fuel to the engine.

## Patentansprüche

1. Elektronisches Steuerverfahren für den Betrieb von Brennkraftmaschinen, die ein elektronisches Steuersystem enthalten, das aufweist:

Fühler (56, 132, 116, 118, 24, 149), die Betriebsbedingungen (z.B. Kuhlwassertemperatur (TW), Batteriespannung (VB), Stellung der Drosselklappe ($\theta_{TH}$), Kraftstoff/Luft-Mischungsverhältnis ($\lambda$), Luftdurchfluß (AF) im Ansaugweg der Brennkraftmaschine, Drehzahl (N)) der Brennkraftmaschine erfassen,

ein Zentralverarbeitungseinheit (CPU), die rechnerisch Steuergrößen zur Steuerung der Brennkraftmaschine durch digitale Verarbeitung der Ausgangssignale der Fühler ermittelt,

Speicher, die Programme und Daten zur Durchführung der Rechenoperationen speichern und

Steuereinrichtungen, die auf der Basis der Rechenergebnisse die Brennkraftmaschine steuern,

gekennzeichnet durch

11

A) Erfassen der Zustände des Startschalters und des Stromversorgungsschalters,

B) Wiederholtes Ausführen folgender Verfahrensschritte in einer Schleife nachdem die Stromversorgung eingeschaltet und bevor der Startschalter geschlossen ist:

B1) Erfassen der Anfangsbedingungen der Brennkraftmaschine aufgrund der Kühlwassertemperatur und der Batteriespannung und nachfolgend

B2) Erfassen der anfänglich gelieferten Kraftstoffmenge und des Zündzeitpunktes in Abhängigkeit von der Kühlwassertemperatur (TW) und der Batteriespannung (VB) und

C) wiederholte Ausführung folgender Schritte in vorgegebenen Zeitabständen jeweils während der geschlossenen Zustands des Startschalters:

C1) Erfassen der Bedingungen der Brennkraftmaschine aufgrund der Kühlwassertemperatur, der Drehzahl (N) und der Luftdurchflußmenge (AF), und

C2) Ermitteln der zu liefernden Kraftstoffmenge und des Zündzeitpunktes für den Brennkraftmaschinenstart abhängig von der Kühlwassertemperatur (TW) und der Dauer des Schließzustandes des Startschalters, so daß die Dauer der Kraftstoffeinspritzung mit länger werdender Anlaßdauer des Anlassermotors kürzer wird.

2. Verfahren nach Anspruch 1, dadurch gekennzeichnet, daß im Verfahrensschritt (C) eine Kraftstoffpumpe zur Kraftstofflieferung für die Brennkraftmaschine in Betrieb gesetzt wird.

**Revendications**

1. Procédé de commande électronique du fonctionnement de moteurs à combustion interne équipés d'un système de commande électronique comportant des capteurs (56, 132, 116, 118, 24, 149) détectant des conditions de fonctionnement (par exemple la température de l'eau de refroidissement (TW), la tension (VB) de la batterie, l'angle ($\theta_{TH}$) du papillon des gaz, le rapport de mélange air/carburant ($\lambda$), le débit d'air (AF) dans le passage d'admission du moteur, la vitesse de rotation du moteur (N)) du moteur, une unité centrale de traitement (CPU) déterminant arithmétiquement des grandeurs de commande pour commander ledit moteur au moyen du traitement numérique de signaux de sortie délivrés par lesdits capteurs, des moyens de mémoire pour mémoriser en eux des programmes et des données pour l'exécution desdites opérations arithmétiques, et des moyens de commande pour commander ledit moteur sur la base des résultats des opérations arithmétiques, caractérisé par

A) la détection des états du contacteur de démarrage et de l'interrupteur d'alimentation en énergie;

B) l'exécution répété des étapes opératoires suivantes en un sous-programme en boucle après branchement de l'alimentation en énergie et avant fermeture de contacteur de démarrage:

B1) détection des conditions initiales du moteur zur la base de la température de l'eau de refroidissement et de la tension de la batterie, et ensuite

B2) détermination de la quantité initiale d'alimentation en carburant et de la séquence d'allumage en fonction de la température (TW) de l'eau de refroidissement et de la tension (VB) de ladite batterie, et

C) l'exécution répétée des étapes suivantes pendant des intervalles de temps prédéterminés, respectivement pendant que le contacteur de démarrage est à l'état fermé:

C1) détection des conditions du moteur sur la base de la température (TW) de l'eau de refroidissement, de la vitesse de rotation (N) du moteur et de la valeur (AF) du débit d'air, et

C2) détermination de la quantité d'alimentation en carburant et de la séquence d'allumage pour le démarrage du moteur en fonction de la température (TW) de l'eau de refroidissement et de la durée de l'état fermé du contacteur de démarrage, de sorte que la durée de l'injection de carburant diminue lorsque l'excitation du moteur du démarreur est plus longue.

2. Procédé selon la revendication 1, caractérisé en ce que, lors de l'étape opératoire (C), une pompe à carburant est mise en marche pour l'envoi de carburant au moteur.

FIG. 1

# FIG. 2

# FIG. 3

POWER SOURCE ON

BEFORE START — STARTING — AFTER START

STARTER SWITCH — (ON) — (OFF)

SOFTWARE FLAG IST

SOFTWARE FLAG EM

| TASK |
|---|
| ADC 2 IN |
| INJ DWL CAL IGN CAL |
| MONIT |
| ADC I IN |
| ISC |
| HOSEI |
| ISTRT |

ACTIVATION OF SOFT TIMER (T)

Q&T

Q&T

Q

ACTIVATION REQUEST (Q)

T

→ TIME

FIG. 4

RESET & START

281 INITIALIZATION OF STACK POINTER

282 CLEARING OF R/W MEMORY AREA S

283 INITIALIZATION OF IN/OUT INTERFACE

284 ACTIVATION OF ADC1 ST

285 REMOVAL OF INHIBITION OF ADC1 END IRQ

286 INHIBITION OF ADC2 END IRQ

287 SET SOFTWARE FLAG IST, EM

TASK SCHEDULER 242

FIG. 5

ADC 1 IN

288 FETCHING OF ADC1 DATA (ADC1 IN)

289 ACTIVATION OF ADC1 ST

290 IS FETCHING OF ALL ADC1 DATA COMPLETED? NO

YES

291 ACTIVATION OF HOSE1 AND ISTRT

EXIT

FIG. 6

ISTRT

292 CALCULATION OF INITIAL VALUES FOR INJ AND IGN

293 IS STARTER SWITCH ON? NO

YES

294 ACTIVATION OF ADC1 ST AND MONIT. ADC2IN AND MONITOR SOFT TIMERS ARE STARTED

297 ADC1 ACTIVATION REQUEST FLAG IS SET

295 INITIALIZING FUEL PUMP 32 AND SETTING "H" TO MODE REG

296 SOFTWARE FLAG IST IS RESET

EXIT

## F I G. 7

TEMPERATURE OF ENGINE COOLING WATER (°C)

## F I G. 8

TEMPERATURE OF ENGINE COOLING WATER (°C)

## F I G. 9

TEMPERATURE OF ENGINE COOLING WATER (°C)

# FIG. 10

IS STARTER SWITCH OFF ? — 302

NO

YES

NUMBER OF EXECUTIONS OF MONIT IS DETERMINED — 303

ACTIVATION OF INJ & IGNCAL START OF TIMER INHIBITION OF SOFT TIMER FOR MONIT ACTIVATION OF OTHER SOFT TIMERS — 306

FUEL SUPPLY AND IGNITION TIME ARE CALCULATED — 304

INHIBITION OF ENST IRQ IS REMOVED — 308

SOFTWARE FLAG EM IS RESET — 309

MONIT

EXIT

**0 017 218**

## F I G. 11

222 — IRQ

502 — IS SOFTWARE FLAG EM "1"? — YES

500 — IS ADC1 END IRQ ? — YES

NO

ACTIVATION-REQUEST FLAG FOR ADC1 IN IS SET — 504

506 — IS ADC2 END IRQ ? — YES

NO

508 — IS INTV IRQ ? — NO

YES

509 — IS CONTENT OF COUNTER n 0 ? — YES

NO

510 — n OF TWC n IS DECREMENTED BY 1

512 — TCW n COUNTER READY FOR REGISTRATION ? — NO

YES — 514

ACTIVATION REQUEST FLAG IS SET AT b6 OF TCW n AND TTM IS SET IN COUNTER n

n OF TCW n IS INCREMENTED TO (n+1) — 516

518 — n = n MAX ? — NO

YES

520 — IS ENST IRQ ? — NO

YES

522 — ENST TASK

RTI

START

TASK SCHEDULER — 242

7

## F I G. 12

TASK SCHEDULER  242

530 IS EXECUTION OF TASK n REQUIRED ?

NO

YES

542

532 n OF TASK n IS DECREMENTED BY 1

538 IS TASK n INTERRUPTED ?

YES

NO

534 n = MAX ?

NO

YES

542 ACTIVATION REQUEST FLAG FOR TASK n IS SET

RTI  540

536 RTI

544 RUN FLAG OF TASK n IS SET

546 START ADDRESS FOR TASK n IS RETRIEVED

548 JUMP TO PROGRAM TASK n

JUMP TO PROGRAM TASK n

## F I G. 13